# EUROPEAN PATENT APPLICATION

(11) **EP 2 034 708 A1**
(43) Date of publication of application: **11.03.2009**
(21) Application number: 08170348.0
(22) Date of filing: 27.10.2003
(51) Int. Cl.: H04M 1/725

(54) **Mobile telephone with remote-controlling capability, remote-controlling method and system therefor**

(30) Priority: 30.10.2002 JP 2002315241; 01.10.2003 JP 2003342744
(62) Divisional of application: 03024541.9
(71) Applicant: NEC CORPORATION, Tokyo (JP)
(72) Inventor: Nonaka, Susumu, Saitama (JP); Nobuswaka, Hideaki, Saitama (JP)
(74) Representative: Betten & Resch

(57) **Abstract**

To obtain a mobile telephone with remote-controlling capability easily available as a remote-controller.

Various remote control codes for predetermined various controlling operations on target equipment are associated with a plurality of operation buttons of an operation unit of a mobile telephone in a one-to-one relationship, and stored in memory of the mobile telephone. When an operation button is depressed, a control unit of the mobile telephone reads a remote control code associated with the depressed button from the memory, and transmits it to the target equipment using an infrared emission unit.

## Description

### BACKGROUND OF THE INVENTION

### Field of the Invention

The present invention relates to a mobile telephone with remote-controlling capability, and a remote-controlling method, program, and remote control system for the mobile telephone, and more specifically to a mobile telephone with remote-controlling capability which remote-controls target equipment (equipment to be controlled) by transmitting to the target equipment a desired code in various remote control codes for predetermined various controlling operations to be performed on the target equipment.

### Description of the Related Art

A mobile telephone described in Japanese Patent Application Laid-Open No. 2002-204292 downloads a control code from a server which holds the control code for remote-controlling target equipment through a communications network, and stores the control code in the memory of the mobile telephone. Then, the mobile telephone transmits the control code stored in the memory to the target equipment through a predetermined communications medium, thereby successfully remote-controlling the target equipment.

Japanese Patent Application Laid-Open No. 2002-204292 does not disclose a practical operation performed on a mobile telephone by a user to transmit to target equipment a control code for use in performing user-desired control on the target equipment among control codes stored in the memory of the mobile telephone. However, it is obviously necessary for the user to learn how to operate the mobile telephone as a remote-controller of the target equipment.

That is, the user has to learn a normal user operating method of using a mobile telephone as a phone for its original purpose, and a user operating method of using the mobile telephone as a remote-controller, which is a troublesome problem for the user.

### SUMMARY OF THE INVENTION

The present invention aims at providing a mobile telephone with remote-controlling capability easily available as a remote-controller, and a remote-controlling method, program, and remote control system for the mobile telephone.

A mobile telephone with remote-controlling capability according to the present invention remote-controls target equipment by transmitting to the target equipment a desired code in various remote control codes for predetermined various controlling operations on the target equipment. The mobile telephone includes: an operation unit having a plurality of operation buttons; storage means for storing the various remote control codes associated with the plurality of operation buttons in a one-to-one relationship; and transmission means for transmitting to the target equipment a remote control code, which is associated with one button of the plurality of operation buttons and is one of the various remote control codes stored in the storage means when the one button is pressed.

The mobile telephone with remote-controlling capability further includes display means for displaying correspondences between the plurality of operation buttons and the predetermined various controlling operations performed when the plurality of operation buttons are pressed respectively.

In the mobile telephone with remote-controlling capability, the display means displays the correspondences by displaying an image of the operation unit showing controlling operations on and corresponding to the plurality of operation buttons.

The mobile telephone with remote-controlling capability further includes download means for downloading the various remote control codes associated with the plurality of operation buttons in a one-to-one relationship from a server, which is connected to a communications network, and has the various remote control codes associated with the plurality of operation buttons in a one-to-one relationship, through the communications network, and storing the various remote control codes in the storage means.

A remote-controlling method according to the present invention is used with a mobile telephone with remote-controlling capability which remote-controls target equipment by transmitting to the target equipment a desired code in various remote control codes for predetermined various controlling operations on the target equipment, and has an operation unit and storage means for storing the various remote control codes associated with a plurality of operation buttons of the operation unit in a one-to-one relationship. The method includes a transmitting step of transmitting to the target equipment a remote control code, which is associatedwith one button of the plurality of operation buttons, and is one of the various remote control codes stored in the storage means, when the one button is pressed.

A program according to the present invention is used to direct a computer to execute a remote-controlling method for a mobile telephone with remote-controlling capability which remote-controls target equipment by transmitting to the target equipment a desired code in various remote control codes for predetermined various controlling operations on the target equipment, and has an operation unit and storage means for storing the various remote control codes associated with a plurality of operation buttons of the operation unit in a one-to-one relationship. The program includes a transmitting step of transmitting to the target equipment a remote control code, which isassociatedwithonebuttonof the plurality of operation buttons, and is one of the various remote control codes stored in the storage means, when the one button is pressed.

A remote control system according to the present invention includes: a mobile telephone with remote-controlling capability which has an operation unit provided with a plurality of operation buttons and remote-controls target equipment; and a server which is connected to a communications network, and associates various remote control codes for predetermined various controlling operations on the target equipment with the plurality of operation buttons in a one-to-one relationship and holds the codes. The mobile telephone includes: storage means; download means for downloading the various remote control codes associated with the plurality of operation buttons in a one-to-one relationship from the server through the communications network, and storing the codes in the storage means; and transmission means for transmitting to the target equipment a remote control code, which is associated with one button of the plurality of operation buttons and is one of the various remote control codes stored in the storage means when the one button is pressed.

A mobile telephone with remote-controlling capability according to the present invention remote-controls target equipment, and includes: storage means for storing a group of remote control codes for a predetermined controlling operation to be performed on the target equipment; and transmission means for transmitting to the target equipment the group of remote control codes for the predetermined controlling operation to be performed on the target equipment in response to a user operation.

A mobile telephone with remote-controlling capability according to the present invention remote-controls target equipment, and includes: an operation unit having a plurality of operation buttons; storage means for storing various remote control codes associated with the plurality of operation buttons in a one-to-one relationship for various controlling operations on the target equipment, and a part of remote control codes of a group of remote control codes for a predetermined controlling operation on the target equipment; and transmission means for transmitting to the target equipment the group of remote control codes formed by a remote control code associated with an operations button pressed by a user in advance and the part of remote control codes to perform the predetermined controlling operation on the target equipment in response to a user operation.

A mobile telephone with remote-controlling capability according to the present invention remote-controls target equipment, and includes: an operation unit having a plurality of operation buttons; storage means for storing various remote control codes associated with the plurality of operation buttons in a one-to-one relationship for various controlling operations on the target equipment, a first group of remote control codes for a predetermined first controlling operation on the target equipment, and a part of remote control codes of a second group of remote control codes for a predetermined second controlling operation on the target equipment; and transmission means for transmitting to the target equipment a remote control code associated with one button of the plurality of operation buttons when the one button is pressed and when the mobile telephone is set in a first remote control mode, transmitting to the target equipment the first group of remote control codes in response to a user operation when the mobile telephone is set in a second remote control mode, and transmitting to the target equipment the second group of remote control codes formed by a remote control code associated with an operation button pressed by a user in advance and the part of remote control codes in response to a user operation when the mobile telephone is set in a third remote control mode.

A remote-controlling method according to the present invention is used with a mobile telephone with remote-controlling capability which remote-controls target equipment, and has storage means for storing a group of remote control codes for a predetermined controlling operation on the target equipment. The method includes a transmitting step of transmitting to the target equipment the group of remote control codes stored in the storage means in response to a user operation.

A remote-controlling method according to the present invention is used with a mobile telephone with remote-controlling capability which remote-controls target equipment, and has an operation unit and storage means for storing various remote control codes associated with a plurality of operation buttons of the operation unit in a one-to-one relationship for various controlling operations on the target equipment, and a part of remote control codes of a group of remote control codes for a predetermined controlling operation on the target equipment. The method includes a step of transmitting to the target equipment the group of remote control codes formed by the part of remote control codes stored in the storage means and a remote control code associated with an operation button pressed by a user in advance to perform the predetermined controlling operation on the target equipment in response to a user operation.

A remote-controlling method according to the present invention is used with a mobile telephone with remote-controlling capability which remote-controls target equipment, and has an operation unit and storage means for storing various remote control codes associated with a plurality of operation buttons of the operation unit in a one-to-one relationship for various controlling operations on the target equipment, a first group of remote control codes for a predetermined first controlling operation on the target equipment, and a part of remote control codes of a second group of remote control codes for a predetermined second controlling operation on the target equipment. Themethod includes a step of transmitting to the target equipment a remote control code associated with one button of the plurality of operation buttons when the one button is pressed and when the mobile telephone is set in a first remote control mode, a step of transmitting to the target equipment the first group of remote control codes in response to a user operation when the mobile telephone is set in a second remote control mode, and a step of transmitting to the target equipment the second group of remote control codes formed by a remote control code associated with an operation button pressed by a user in advance and the part of remote control codes in response to a user operation when the mobile telephone is set in a third remote control mode.

A program according to the present invention is used to direct a computer to execute a remote-controlling method for a mobile telephone with remote-controlling capability which remote-controls target equipment, and has storage means for storing a group of remote control codes for a predetermined controlling operation on the target equipment. The program includes a transmitting step of transmitting to the target equipment the group of remote control codes stored in the storage means in response to a user operation.

A program according to the present invention is used to direct a computer to execute a remote-controlling method for a mobile telephone with remote-controlling capability which remote-controls target equipment, and has an operation unit and storagemeans for storing various remote control codes associated with a plurality of operation buttons of the operation unit in a one-to-one relationship for various controlling operations on the target equipment, and a part of remote control codes of a group of remote control codes for a predetermined controlling operation on the target equipment. The program includes a step of transmitting to the target equipment the group of remote control codes formed by the part of remote control codes stored in the storage means and a remote control code associated with an operation button pressed by a user in advance to perform the predetermined controlling operation on the target equipment in response to a user operation.

A program according to the present invention is used to direct a computer to execute a remote-controlling method for a mobile telephone with remote-controlling capability which remote-controls target equipment, and has an operation unit and storage means for storing various remote control codes associated with a plurality of operation buttons of the operation unit in a one-to-one relationship for various controlling operations on the target equipment, a first group of remote control codes for a predetermined first controlling operation on the target equipment, and a part of remote control codes of a second group of remote control codes for a predetermined second controlling operation on the target equipment. The program includes a step of transmitting to the target equipment a remote control code associated with one button of the plurality of operation buttons when the one button is pressed and when the mobile telephone is set in a first remote control mode, a step of transmitting to the target equipment the first group of remote control codes in response to a user operation when the mobile telephone is set in a second remote control mode, and a step of transmitting to the target equipment the second group of remote control codes formed by a remote control code associated with an operation button pressed by a user in advance and the part of remote control codes in response to a user operation when the mobile telephone is set in a third remote control mode.

A remote control system according to the present invention includes: a mobile telephone with remote-controlling capability which has an operation unit provided with a plurality of operation buttons, and remote-controls target equipment; and a server which is connected to a communications network, and stores various remote control codes associated with the plurality of operation buttons in a one-to-one relationship for various controlling operations on the target equipment, afirst group of remote control codes for a predetermined first controlling operation on the target equipment, and a part of remote control codes of a second group of remote control codes for a predetermined second controlling operation on the target equipment. The mobile telephone comprises: storage means; download means for downloading the various remote control codes, the first group of remote control codes, and the part of remote control codes from the server through the communications network, and storing the downloaded codes in the storage means; and transmission means for transmitting to the target equipment a remote control code associated with one button of the plurality of operation buttons when the one button is pressed and when the mobile telephone is set in a first remote control mode, transmitting to the target equipment the first group of remote control codes in response to a user operation when the mobile telephone is set in a second remote control mode, and transmitting to the target equipment the second group of remote control codes formed by a remote control code associated with an operation button pressed by a user in advance and the part of remote control codes in response to a user operation when the mobile telephone is set in a third remote control mode.

As described above, according to the present invention, a plurality of operation buttons of an operation unit of a mobile telephone with remote-controlling capability are associated with various remote control codes for predetermined various controlling operations on target equipment in a one-to-one relationship. When an operation button is pressed, transmission means of the mobile telephone reads a remote control code associated with the pressed button from storage means storing the various remote control codes, and transmit it to the target equipment.

That is, the predetermined various controlling operations on the target equipment are assigned to the plurality of operation buttons in advance. When an operation button is pressed, the controlling operation assigned to the pressed button is performed on the target equipment. Therefore, a user only has to press a button corresponding to user-desired controlling operation in the plurality of operation buttons to perform the user-desired controlling operation on the target equipment, thereby easily using the mobile telephone as a remote controller of the target equipment.

According to the present invention, since the correspondences between the plurality of operation buttons and the predetermined various controlling operations assigned to the buttons are displayed on the display means of the mobile telephone, the user can easily use the mobile telephone as a remote controller.

Furthermore, according to the present invention, a server holds the various remote control codes associated with the plurality of operation buttons in a one-to-one relationship, and the download means of the mobile telephone downloads the various remote control codes held by the server. Therefore, although the storage means of the mobile telephone does not store various remote control codes for the target equipment, the various remote control codes can be obtained from the server, thereby successfully remote-controlling the target equipment.

Additionally, according to the present invention, to perform a controlling operation on target equipment by sequentially transmitting a plurality of remote control codes, a group of remote control codes formed by the plurality of remote control codes is stored in the storage means of a mobile phone so that the target equipment can be controlled by transmitting the group of remote control codes in response to a user operation. Thus, a user only has to issue an instruction to transmit the group of remote control codes to perform the controlling operation, which requires various information, on the target equipment. That is, the target equipment can be easily remote-controlled with the minimum operations.

Furthermore, according to the present invention, to perform a controlling operation on target equipment by sequentially transmitting a plurality of remote control codes, a part of remote control codes of the plurality of remote control codes are stored in the storage means of a mobile telephone, and various remote control codes associated with a plurality of operation buttons in a one-to-one relationship are also stored in the storage means. Thus, when the target equipment is to be remote-controlled, a group of remote control codes formed by a remote control code associated with a button pressed by a user and the above-mentioned part of remote control codes is transmitted. Thus, when the controlling operation requiring various information is to be performed on the target equipment, a user only has to press an operation button to determine a part of the various information, and only has to perform an operation to issue an instruction to transmit the group of remote control codes, thereby easily performing the controlling operation, which requires various information, on the target equipment.

### BRIEF DESCRIPTION OF THE DRAWINGS

FIG. 1 shows the configuration of a remote control system according to a first embodiment of the present invention;
FIG. 2 shows the configuration of a mobile telephone shown in FIG. 1;
FIG. 3 shows the appearance of the mobile telephone shown in FIG. 1;
FIG. 4 shows an example of a data set for remote-controlling target equipment;
FIG. 5 shows an example of a television remote controller selection screen of a display unit shown in FIG. 2;
FIG. 6 shows an example of a display of the display unit shown in FIG. 2 showing the correspondences between a plurality of operation buttons of an operation unit shown in FIG. 3 and predetermined various controlling operations on target equipment to be remote-controlled which are performed by pressing corresponding buttons;
FIG. 7 is a flowchart of the operations of the mobile telephone shown in FIG. 1;
FIG. 8 shows an example of a data set used according to a second embodiment of the present invention;
FIG. 9 is a flowchart of the operations of a mobile telephone according to the second embodiment of the present invention;
FIG. 10 is a flowchart of the operations of the mobile telephone according to the second embodiment of the present invention;
FIG. 11 is a flowchart of the operations of the mobile telephone according to the second embodiment of the present invention;
FIG. 12 is a flowchart of the operations of the mobile telephone according to the second embodiment of the present invention;
FIG. 13 shows an example of a transmission code group selection screen of the display unit shown in FIG. 2:
FIG. 14 shows an example of a data input screen of the display unit shown in FIG. 2;
FIG. 15 shows an application example of a data set shown in FIG. 8; and
FIG. 16 shows the transmission order of remote control codes in an application example of the third transmitting method according to the second embodiment of the present invention.

### DETAILED DESCRIPTION OF THE PREFERRED EMBODIMENTS

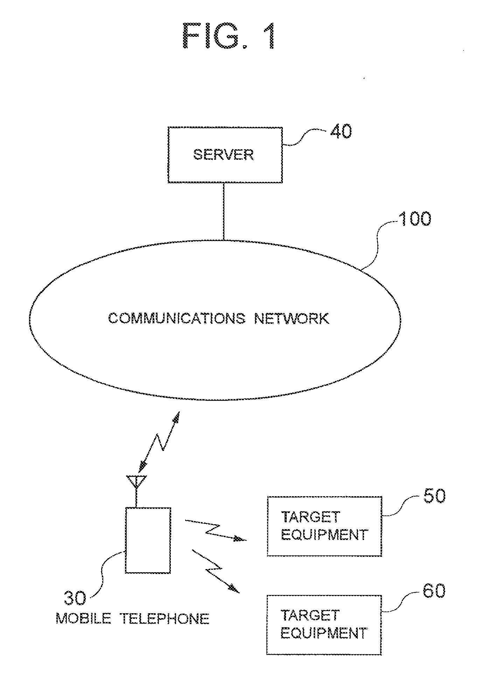

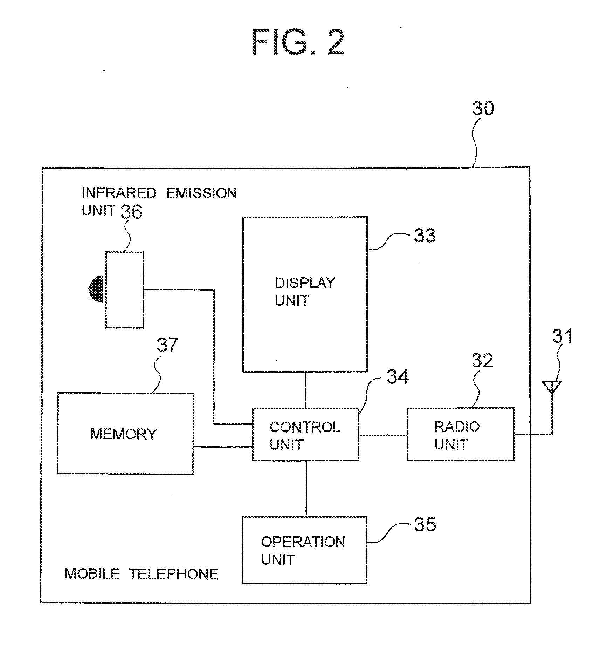

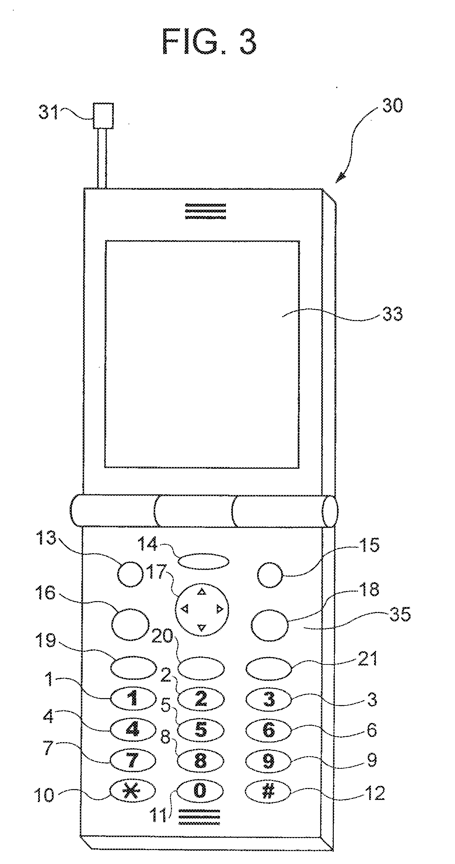

The embodiments of the present invention are described below by referring to the attached drawings. FIG. 1 shows the configuration of a remote control system according to a first embodiment of the present invention. FIG. 2 shows the configuration of a mobile telephone 30 according to the first embodiment of the present invention, and shows the same reference numerals for the same components shown in FIG. 1. FIG. 3 shows the appearance of the mobile telephone 30 shown in FIG. 2, and the same reference numerals for the same components shown in FIG. 2.

As shown in FIG. 1, the remote control system according to the first embodiment of the present invention is formed by the mobile telephone 30, a server 40, target equipment 50 and 60, and a communications network 100 such as a telephone network, the Internet, etc. As shown in FIG. 2, the mobile telephone 30 is formed by an antenna 31, a radio unit 32, a display unit 33, a control unit 34, an operation unit 35, an infrared emission unit 36, and memory 37.

The mobile telephone 30 can be used as a remote controller for remote-controlling each of the target equipment 50 and 60. That is, the mobile telephone 30 can perform predetermined various controlling operations on each of the target equipment 50 and 60.

For example, when target equipment is a television, predetermined various controlling operations on it can be turning on/off the power, selecting a television channel, adjusting the volume, etc. When target equipment is a video tape recorder, predetermined various controlling operations on it can be turning on/off the power, playing back a program, recording a program, etc.

As shown in FIG. 3, the operation unit 35 is provided with a plurality of operation keys 1 to 21. Each operation key is an operation button, but a function key 17 only in the plurality of operation keys 1 to 21 in the example shown in FIG. 3 is formed by four operation buttons.

Various remote control codes for predetermined various controlling operations on the target equipment 50 are associated with the plurality of operation buttons of the operation unit 35 in a one-to-one relationship, and stored as a data set in the memory 37. Also various remote control codes for predetermined various controlling operations on the target equipment 60 are associated with the plurality of operation buttons of the operation unit 35 in a one-to-one relationship, and stored as a data set in the memory 37.

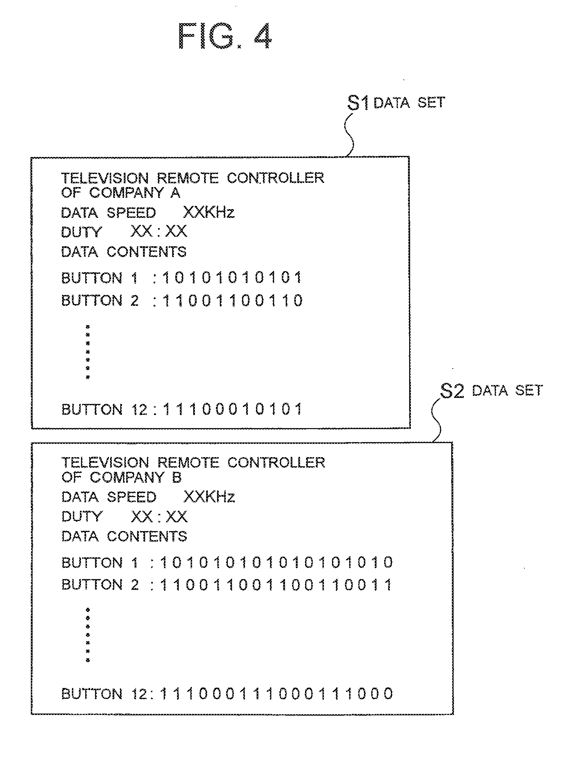

FIG. 4 shows an example of a data set. In the example shown in FIG. 4, a data set S1 is used in remote-controlling the target equipment 50, and a data set S2 is used in remote-controlling the target equipment 60. In this case, the target equipment 50 and 60 are televisions, and the manufacturer of the target equipment 50 is "Company A", and the manufacturer of the target equipment 60 is "Company B". Each of the data sets S1 and S2 is formed by data speed information, duty information, any various remote control codes associated with the plurality of operation buttons of the operation unit 35 in a one-to-one relationship.

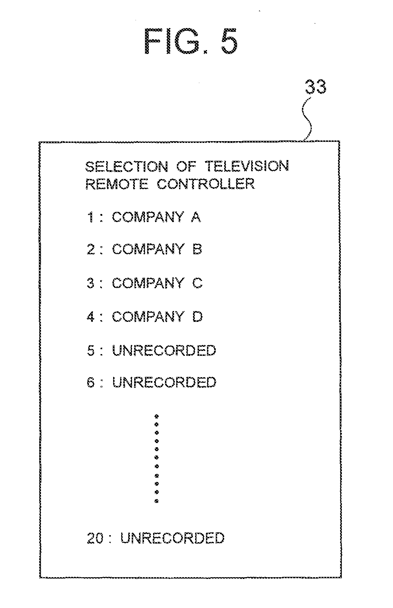

When a plurality of data sets are stored in the memory 37, it is necessary to select a data set for use in using the mobile telephone 30 as a remote controller. That is, it is necessary to specify a target equipment unit for which the mobile telephone 30 is used as a remote controller. When a data set is selected, the screen as shown in FIG. 5 is displayed on the display unit 33 by the control of the control unit 34.

FIG. 5 shows a television remote controller selection screen on which "1: Company A" indicates the data set S1 for television of the manufacturer "Company A", "2: Company B" indicates the data set S2 for television of the manufacturer "Company B", "3: Company C" indicates the data set for television (not shown in FIG. 4) of the manufacturer "Company C", and "4: Company D" indicates the data set for television (not shown in FIG. 4) of the manufacturer "Company D". In this case, the memory 37 stores the above-mentioned four data sets as data set for television.

When, for example, the user selects "1: Company A" using the operation unit 35 from among the choices "1: Company A" to "4: Company D" shown in FIG. 5, that is, the data set S1, the mobile telephone 30 is set as a remote controller of the target equipment 50 (in this case, the target equipment 50 is a television of the manufacturer "Company A").

When the mobile telephone 30 is set as a remote controller of the target equipment 50, and when the user presses one of the plurality of operation buttons of the operation unit 35, the control unit 34 reads a remote control code associated with the pressed button from the data set S1 stored in the memory 37, and transmits the read remote control code to the infrared emission unit 36. The infrared emission unit 36 transmits to the target equipment 50 an infrared signal corresponding to the remote control code from the control unit 34. The infrared signal from the infrared emission unit 36 is received by the target equipment 50, and the target equipment 50 is remote-controlled.

On the other hand, when the mobile telephone 30 is set as a remote controller of the target equipment 60, and when the user presses one of the plurality of operation buttons, the control unit 34 reads a remote control code associated with the pressed button from the data set S2 stored in the memory 37, and transmits the read remote control code to the infrared emission unit 36. Therefore, an infrared signal corresponding to the remote control code is transmitted from the infrared emission unit 36 to the target equipment 60, thereby remote-controlling the target equipment 60.

In the example shown in FIG. 5, since the memory 37 stores the data sets for televisions of the manufacturers "Company A" to "Company D" only, the television of another manufacturer (hereinafter referred to as the television of the manufacturer "Company E") cannot be remote-controlled. However, when the mobile telephone 30 downloads the data set for television of the manufacturer "Company E" from the server 40 through the communications network 100, the television of the manufacturer "Company E" can be remote-controlled.

In addition to the data set for the target equipment 50 and 60, the server 40 connected to the communications network 100 also holds the data sets for various target equipment not shown in the attached drawings (electric appliances for household such as television, video tape recorder, sound equipment, air-conditioner, etc. and karaoke playback system, etc.). The format of each data set held by the server 40 is the same as the format of the data set shown in FIG. 4.

When the user designate downloading the data set for television of the manufacturer "Company E" using the operation unit 35, the control unit 34 transmits a request to download the dataset for television of the manufacturer "Company E" through the radio unit 32 and the antenna 31. Upon receipt of the request through the communications network 100, the server 40 transmits the data set for television of the manufacturer "Company E" held by the server 40 to the mobile telephone 30 through the communications network 100. The control unit 34 stores in the memory 37 the data set received through the antenna 31 and the radio unit 32.

Thus, the option of "5: unrecorded" on the television remote controller selection screen shown in FIG. 5 is "5: Company E". When the option is selected, the mobile telephone 30 can be set as a remote controller for the television of the manufacturer "Company E".

When the mobile telephone 30 is set as a remote controller of target equipment, the correspondences between the plurality of operation buttons of the operation unit 35 and predetermined various controlling operations on the target equipment performed when the corresponding buttons are pressed are displayed on the display unit 33 by the control of the control unit 34.

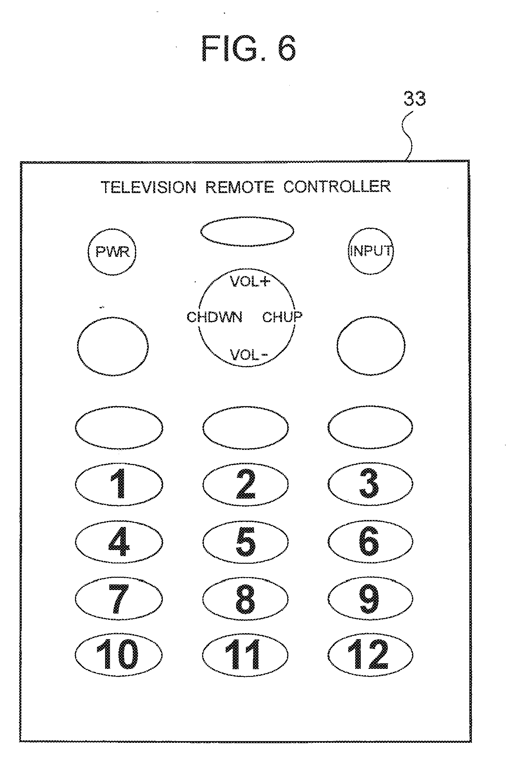

For example, when the mobile telephone 30 is set as a remote controller for television, the display unit 33 displays the screen as shown in FIG. 6. As shown in FIG. 6, the display unit 33 displays an image of the operation unit 35 indicating a corresponding controlling operation on each of the plurality of operation buttons. By the display, the user presses an operation button 10 (refer to FIG. 3) of the operation unit 35 to select a channel "10", presses an operation button 13 to turn on/off the power of the television, presses each of the four operation buttons of the function key 17 to adjust the volume and select a channel, etc. , thereby allowing the user to easily control the target equipment by pressing any button of the operation unit 35.

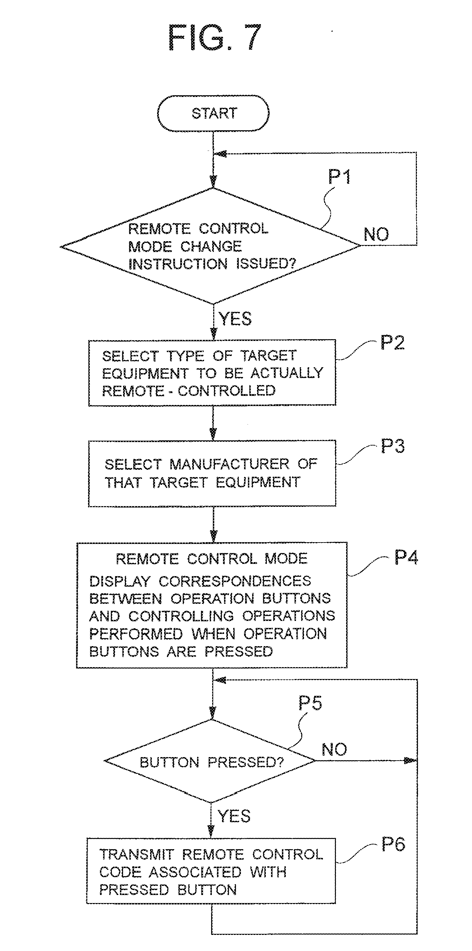

FIG. 7 is a flowchart of the operation of the mobile telephone 30. The operations of the mobile telephone 30 are described below by referring to FIGS. 1 to 7. In the explanation below, it is assumed that the target equipment 50 is a television of the manufacturer "Company A", and the target equipment 60 is a television of the manufacturer "Company B". In the system shown in FIG. 1, it is assumed that there are a television of the manufacturer "Company C", a television of the manufacturer "Company", and a video tape recorder of the manufacturer "Company F" as target equipment in addition to the target equipment 50 and 60. Additionally, it is assumed that the data sets for the above-mentioned five target equipment (the format of each data set is the same as the format of the data set shown in FIG. 4) are all stored in the memory 37.

The operations of the mobile telephone 30 are described below using an example in which, among the above-mentioned five target equipment, the target equipment 50 is remote-controlled using the mobile telephone 30. That is, the operations of the mobile telephone 30 are described below using an example in which the target equipment to be actually remote-controlled is the target equipment 50.

When the user instructs a change into a remote control mode in which the mobile telephone 30 operates as a remote controller of target equipment (step P1, YES), the control unit 34 instructs the display unit 33 to display the screen (not shown in the attached drawings) for selection of the type of target equipment to be actuallyremote-controlled. Possible types can be, for example, "television", "videotaperecorder", "soundequipment", "karaoke playback system", etc. as options.

As described above, since the target equipment to be actually remote-controlled is the target equipment 50, the user selects an option of "television" using the operation unit 35 (step P2). In response to the selection, the control unit 34 displays the television remote controller selection screen shown in FIG. 5 on the display unit 33.

In step P2, if the option of "video tape recorder" is selected, then a video tape recorder selection screen, not the television remote controller selection screen shown in FIG. 5, is displayed on the display unit 33. Since the data set for a video tape recorder stored in the memory 37 is only the data set for the video tape recorder of the manufacturer "Company F", the video tape recorder selection screen is displayed as replacing "selection of television remote controller", "1. Company A", "2: CompanyB", "3: Company C", and "4: Company D" on the television remote controller selection screen shown in FIG. 5 respectively with "selection of video tape recorder remote controller", "1: Company F", "2: unrecorded", "3: unrecorded", and "4: unrecorded".

As describe above, since the target equipment to be actually remote-controlled is the target equipment 50, the user selects the option of "1: Company A" using the operation unit 35 on the television remote controller selection screen shown in FIG. 5 after selecting the option of "television" in step P2 (step P3). Thus, the mobile telephone 30 is set as a remote controller of the target equipment 50 (television of the manufacturer "Company A"). That is, the mobile telephone 30 is changed to the remote control mode in which it is operated as a remote controller of the target equipment 50 (step P4).

Concurrently when the mobile telephone 30 enters the remote control mode, the display unit 33 displays the screen shown in FIG. 6 by the control of the control unit 34 (step P4). When the mobile telephone 30 operates in the remote control mode, the display is fixed.

When an operation button of the operation unit 35 is pressed in the remote control mode (step P5, YES), the remote control code associated with the pressed button in the data set for the target equipment 50 and stored in the memory 37 is transmitted to the target equipment 50 (step P6), and the target equipment 50 is remote-controlled.

The processing operations according to the flowchart shown in FIG. 7 can be realized by the program stored in advance in a storage medium such as ROM or the like and read by a CPU (control unit), that is, a computer.

According to the first embodiment of the present invention, a remote control code read from the memory 37 is transmitted by the infrared emission unit 36 as an infrared signal, but the remote control code can also be transmittedusing a communications medium (ultrasonics, radio waves (RF), etc.) other than the infrared signal.

Furthermore, the server 40 can hold not only the above-mentioned data set, but also a data set (television program data set) formed by television program title data indicating television programs and the corresponding G codes (Gemster Codes).

In this case, the television program data set is first downloaded to the mobile telephone 30 from the server 40 through the communications network 100. When the user selects a desired television program from among the television programs contained in the downloaded, television program data set using the operation unit 35, the G code corresponding to the selected television program is transmitted from the mobile telephone 30 to a video tape recorder. On receipt of the G code, the video tape recorder can automatically record the selected television program. Thus, a user-desired television program can be easily recorded.

Furthermore, the server 40 can also hold a data set (music data set) formed, by music title data indicating the new music titles of the current week and the corresponding music selection codes. The music selected as a new music title of the current week depends on the karaoke playback system manufacturer, the server 40 holds a music data set for each manufacturer.

In this case, the music data set of the manufacturer of the karaoke playback system to be remote-controlled is first downloaded to the mobile telephone 30 from the server 40 through the communications network 100. If the user selects a desired music from the downloaded music data set using the operation unit 35, then a music selection code corresponding to the selected music is transmitted from the mobile telephone 30 to the karaoke playback system to be remote-controlled, and the music is played back by the playback system. Thus, the user can easily instruct the karaoke playback system to playback the user-desired music.

A second embodiment of the present invention is described below by referring to attached drawings. The configuration of the remote control system according to the second embodiment of the present invention is the same as that shown in FIG. 1, the configuration of the mobile telephone according to the second embodiment of the present invention is the same as that shown in FIG. 2, and the appearance of the mobile telephone is the same as that shown in FIG. 3.

A data set used in the second embodiment of the present invention is different from the data set shown in FIG. 4. By preparing a plurality of remote control code transmitting methods using the data set, various remote control services can be realized by a mobile telephone.

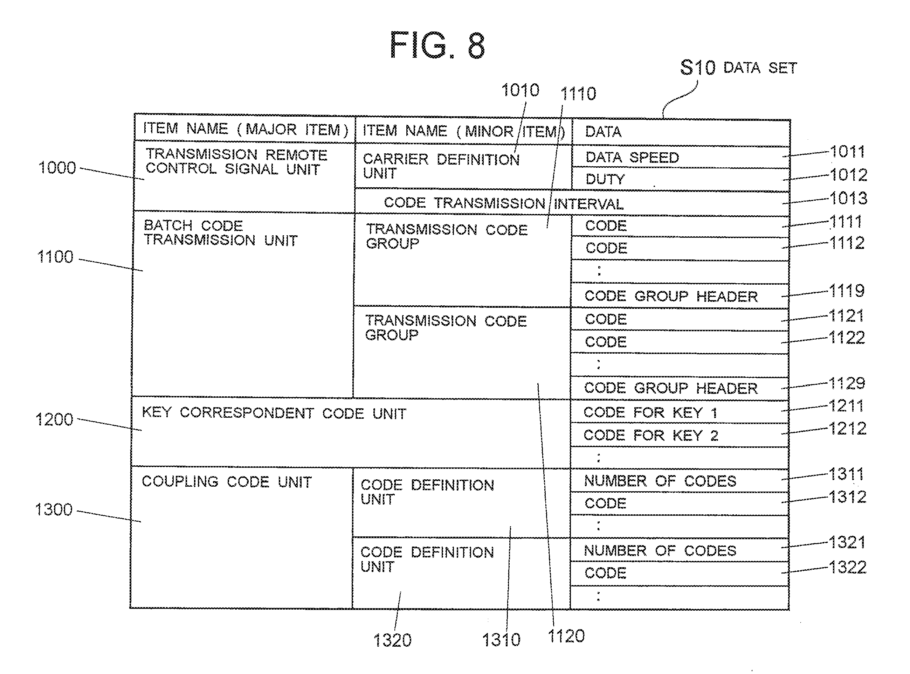

FIG. 8 shows an example of a data set used in the second embodiment of the present invention. As shown in FIG. 8, the data set S10 comprises a transmission remote control signal unit 1000, a batch code transmission unit 1100, a key correspondent code unit 1200, and a coupling code unit 1300.

The transmission remote control signal unit 1000 is an information definition unit for defining waveform information required in transmitting a remote control signal in a radio region. The transmission remote control signal unit 1000 comprises a carrier definition unit 1010 for defining a data speed 1011 and a duty 1012, and a code transmission interval 1013 for use in transmitting a batch of remote control codes as described later.

The batch code transmission unit 1100 is used when some remote control codes are continuously transmitted, and is formed by transmission code groups 1110, 1120, ... which are a group of remote control codes each having a meaning. The transmission code group 1110 is formed by remote control codes 1111, 1112, ... and a code group header 1119, and the transmission code group 1120 is formed by remote control codes 1121, 1122, ... and a code group header 1129. That is, each of the transmission code groups 1110, 1120, ... is formed by a plurality of remote control codes and a code group header. A code group header is mainly character data displayed on the display unit 33 of the mobile telephone 30. A predetermined controlling operation can be performed on target equipment by continuously transmitting the remote control codes forming the transmission code group.

The key correspondent code unit 1200 defines various remote control codes 1211, 1212, ... associated with a plurality of operation buttons of the operation unit 35 in a one-to-one relationship for predetermined various controlling operations on target equipment. For example, when a key "1" (operation button 1 shown in FIG. 3) which is one of the ten keys of the mobile telephone 30 is pressed, the remote control code (code for key 1) 1211 associated with the key "1" is transmitted. When a key "2" (operation button 2 shown in FIG. 3) is pressed, the remote control code (code for key 2) 1212 associated with the key "2" is transmitted. The remote control code transmitting method (first transmitting method) using the key correspondent code unit 1200 is the same as the remote control code transmitting method according to the first embodiment (remote control code transmitting method using the data set shown in FIG. 4).

The coupling code unit 1300 is used for a remote control code transmitting method in which it is necessary to determine a part of remote control codes when the data set S10 is generated and determine a part of remote control codes when a user operation is performed in the remote control code format for control of target equipment which can receive a predetermined number of remote control codes in a predetermined order.

The coupling code unit 1300 is formed by a plurality of code definition units 1310, 1320, ... The code definition unit 1310 is formed by the number of codes 1311, and remote control codes 1312, ... The code definition unit 1320 is formed by the number of codes 1321 and remote control codes 1322, ... As described above, since a part of remote control codes are determined by a user, no remote control codes have not been defined for some of the definition units of the code definition units 1310, 1320, ...

In the format of the data set S10, the format of the coupling code unit 1300 seems to be similar to the format of the batch code transmission unit 1100. However, the transmitting method (third transmitting method) using the coupling code unit 1300 is different from the transmitting method (second transmitting method) using the batch code transmission unit 1100.

In the transmitting method using the coupling code unit 1300, the remote control codes 1312, 1322, ... in all code definition units 1310, 1320, ... are transmitted in one transmitting operation. On the other hand, in the transmitting method using the batch code transmission unit 1100, what is transmitted in one transmitting operation is one of the transmission code groups 1110, 1120, ... In the transmitting method using the coupling code unit 1300, remote control codes determined by a user are transmitted in addition to the remote control codes 1312, 1322, ... By continuously transmitting the remote control codes, a predetermined controlling operation can be performed on target equipment.

The data set S10 is held by the server 40. When a user requests to remote-controls target equipment (for example, the target equipment 50), the user first designates downloading the data set S10 for the target equipment 50 using the operation unit 35. Then, the control unit 34 transmits the request to download the data set S10 for the target equipment 50 through the radio unit 32 and the antenna 31. Upon receipt of the request through the communications network 100, the server 40 transmits the data set S10 for the target equipment 50 held by the server 40 to the mobile telephone 30 through the communications network 100. The control unit 34 stores in the memory 37 the data set S10 received through the antenna 31 and the radio unit 32. Thus, the user can use the mobile telephone 30 as a remote controller of the target equipment 50.

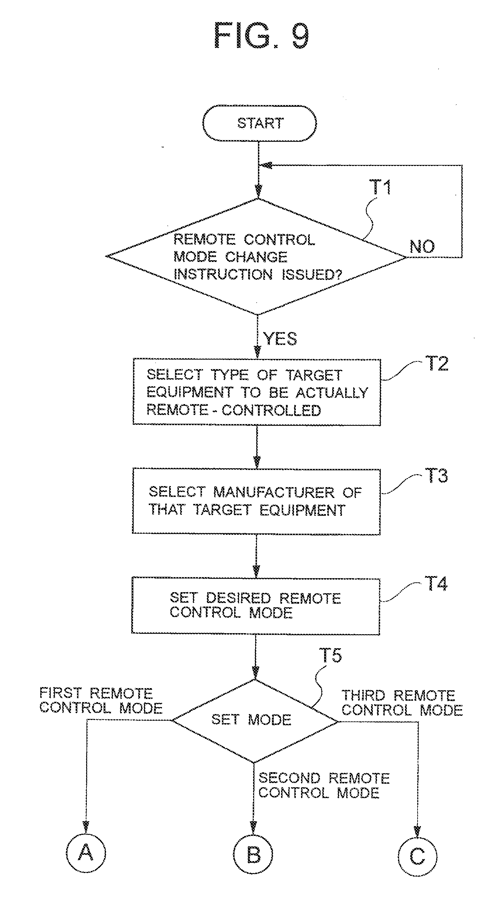

The operations of the mobile telephone 30 according to the second embodiment of the present invention are described below by referring to the attached drawings. FIGS. 9 to 12 are flowchart of the operations of the mobile telephone 30 according to the second embodiment of the present invention. It is assumed that the memory 37 of the mobile telephone 30 stores the data set S10 for the target equipment 50, and the operations of the mobile telephone 30 are described using an example in which the user remote-controls the target equipment 50 using the mobile telephone 30. That is, the operations of the mobile telephone 30 are described using an example in which the target equipment to be actually remote-controlled is the target equipment 50.

When the user designates the switch to a remote control mode in which the mobile telephone 30 operates as a remote controller of target equipment (step T1 shown in FIG. 9, YES), the control unit 34 displays on the display unit 33 the screen (not shown in the attached drawings) for selection of the type of target equipment to be actually remote-controlled.

The user selects the type of the target equipment 50 using the operation unit 35 (step T2 shown in FIG. 9). In response to the user selection, the control unit 34 displays on the display unit 33 the screen (for example, refer to FIG. 5) for selection of a manufacturer of the target equipment to be actually remote-controlled.

The user selects a manufacturer of the target equipment 50 using the operation unit 35 (step T3 shown in FIG. 9). Thus, the mobile telephone 30 uses the data set S10 for the target equipment 50 in each remote control mode described below.

In the second embodiment, first to third remote control modes are prepared as remote control modes. In the first remote control mode, the first transmitting method can be used. In the second remote control mode, the second transmitting method can be used. In the third remote control mode, the third transmitting method can be used.

After step T3, the user sets the mobile telephone 30 in one of the first to third remote control modes using the operation unit 35 (step T4 shown in FIG. 9). Thus, the mobile telephone 30 enters the set mode.

When the mode set in step T4 is the first remote control mode (step T5 shown in FIG. 9, FIRST REMOTE CONTROL MODE), the first transmitting method using the key correspondent code unit 1200 can be used. This is the same method as the transmitting method in the first embodiment.

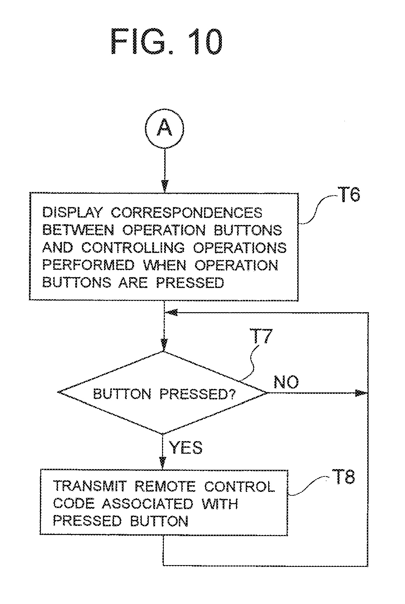

That is, the display unit 33 displays the correspondences (for example, refer to FIG. 6) between the plurality of operation buttons of the operation unit 35 and the predetermined various controlling operations on the target equipment 50 performed by pressing the buttons (step T6 shown in FIG. 10). When the mobile telephone 30 enters the first remote control mode, the display is fixed.

When the operation button of the operation unit 35 is pressed in the first remote control mode (step T7 shown in FIG. 10, YES), the remote control code associated with the pressed button among the remote control codes 1211, 1212, ... of the key correspondent code unit 1200 is transmitted to the target equipment 50 (step T8 shown in FIG. 10), thereby remote-controlling the target equipment 50.

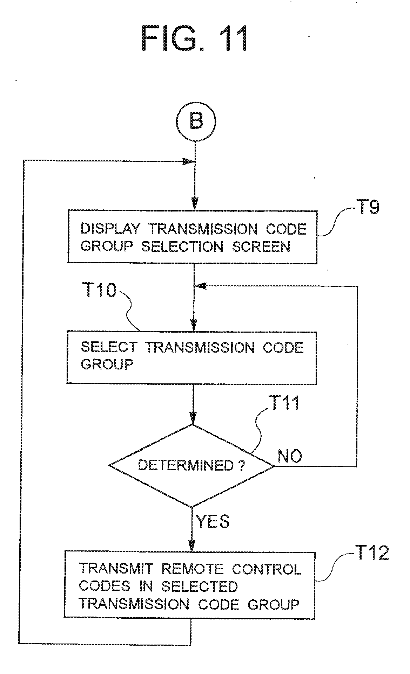

When the mode set in step T4 is the second remote control mode (step T5 shown in FIG. 9, SECOND REMOTE CONTROL MODE), the second transmitting method using the batch code transmission unit 1100 can be used, and control is passed to step T9 shown in FIG. 11.

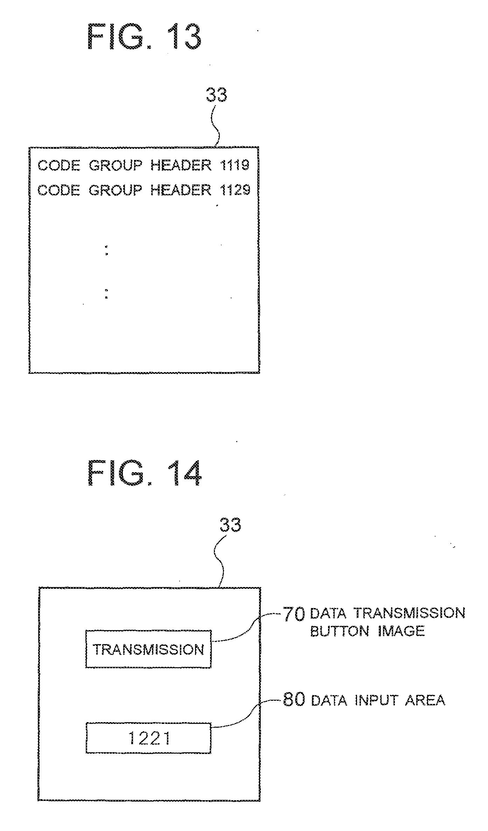

In step T9, the display unit 33 displays the screen shown in FIG. 13 by the control of the control unit 34. FIG. 13 shows the transmission code group selection screen. As shown in FIG. 13, the code group headers 1119, 1129, ... are displayed on the display unit 33. The user selects any of the code group headers 1119, 1129, ... using the operation unit 35, thereby selecting a transmission code group having the selected code group header (step T10 shown in FIG. 11).

When the user presses a determination button of the operation unit 35 (step T11 shown in FIG. 11, YES), the remote control codes of the transmission code group selected in step T10 are sequentially transmitted to the target equipment 50 based on the code transmission interval 1013 (step T12 shown in FIG. 11), thereby remote-controlling the target equipment 50.

Described below is an application example of the second transmitting method. When the target equipment 50 is a video tape recorder, an application example of control on the target equipment 50 by transmitting the transmission code group of the batch code transmission unit 1100 can be, for example, recording of a television program. In this case, the remote control codes forming each of the transmission code groups 1110, 1120, ... are recording information for the recording of one television program, which is the information about a time, a channel, etc. Each of the code group headers 1119, 1129, ... is the title, etc. of a television program. When the target equipment 50 receives the recording information for the recording of one television program, it can automatically record the one television program.

As described above, any of the transmission code groups 1110, 1120, ... is indirectly selected by selecting on the screen any of the code group headers 1119, 1129, ... (step T10 in FIG. 11), and the recording information which is the information about a time, a channel, etc., is transmitted by transmitting the remote control codes in the selected transmission code group (step T12 in FIG. 11). Therefore, the video tape recorder which is the target equipment 50 can automatically record the television program.

A plurality of remote control codes which are information for the recording of a television program are defined as one transmission code group, and the information required when a user selects any of the transmission code groups 1110, 1120, ... such as the title of a program, a time, etc. is defined as a code group header of each transmission code group. Thus, by generating the batch code transmission unit 1100 of the data set S10, the user can confirm a program table on the display shown in FIG. 13, and select and determine a user-desired program. Thus, a user-desired television program can be easily recorded.

As described above, a user only performs self-explanatory operations of selecting and determining a desired program. Therefore, the learning steps for user operations can be reduced, and the recording service for a television program can be easily obtained.

Furthermore, since the mobile telephone 30 obtains the data set S10 from the server 40 through the network 100, The data set S10 can be easily updated, and the user can easily browse and update a program table by accessing the server 40 on the network 100.

Thus, in the second transmitting method using the batch code transmission unit 1100, the learning steps for user operations can be reduced, and the user operating steps can also be reduced.

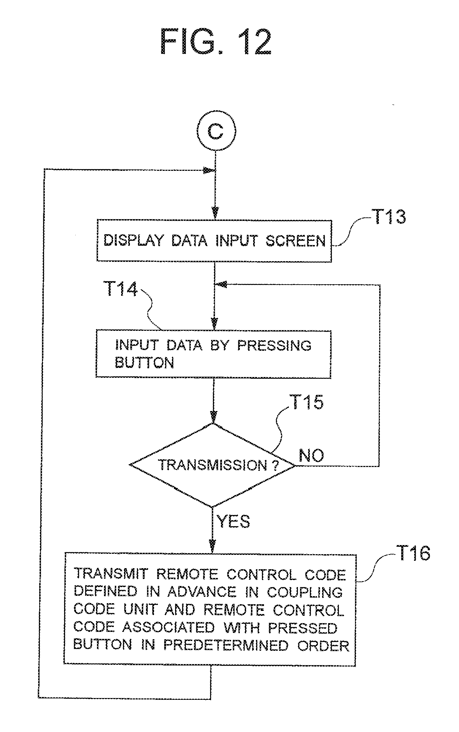

Described below is the third transmitting method. If the mode set in step T4 is the third remote control mode (step T5 in FIG. 9, THIRD REMOTE CONTROL MODE), the third transmitting method using the coupling code unit 1300 can be used, and control is passed to step T13 shown in FIG. 12.

The number of remote control codes transmitted in the third transmitting method is determined by the number of code definition units 1310, 1320, ... and the numbers of codes 1311, 1321, ... of the code definition units 1310, 1320, ...

Each of the numbers of codes 1311, 1321, ... indicates the number of remote control codes defined in the code definition unit having the number of codes. In the code definition unit setting the number of codes to "1" or more, a remote control code is defined after the number of codes. In the code definition unit setting the number of codes to "0", no remote control code is defined. Any of the various remote control codes 1211, 1212, ... in the key correspondent code unit 1200 is assigned to the code definition unit setting the number of codes to "0" when a user operation is performed.

As described above, the meaning of the code definition unit depends on the settings of the number of codes, that is, "1" or more, or "0". That is, the code definition unit in which the number of codes is set to "1" or more is a code definition unit for which the remote control codes are determined when the data set S10 is generated while the code definition unit in which the number of codes is set to "0" is a code definition unit to which a remote control code is assigned when a user operation is performed.

In step T13 in FIG. 12, the display unit 33 displays the screen shown in FIG. 14 by the control of the control unit 34. FIG. 14 shows the data input screen. As shown in FIG. 14, a data transmission button image 70 and a data input area 80 is arranged on the data input screen, but the display image on the display unit 33 is not limited to this application.

The user operates the ten keys, etc. of the operation unit 35 to input data in the data input area 80 (step T14 in FIG. 12). When the user presses the data transmission button image 70 using the operation unit 35 (step T15 in FIG. 12, YES), the remote control codes 1312, 1322, ... of the code definition units 1310, 1320, ... and the remote control code of the key correspondent code unit 1200 associated with the operation button pressed in step T14 are sequentially transmitted to the target equipment 50 based on the code transmission interval 1013 (step T16 of FIG. 12), thereby remote-controlling the target equipment 50.

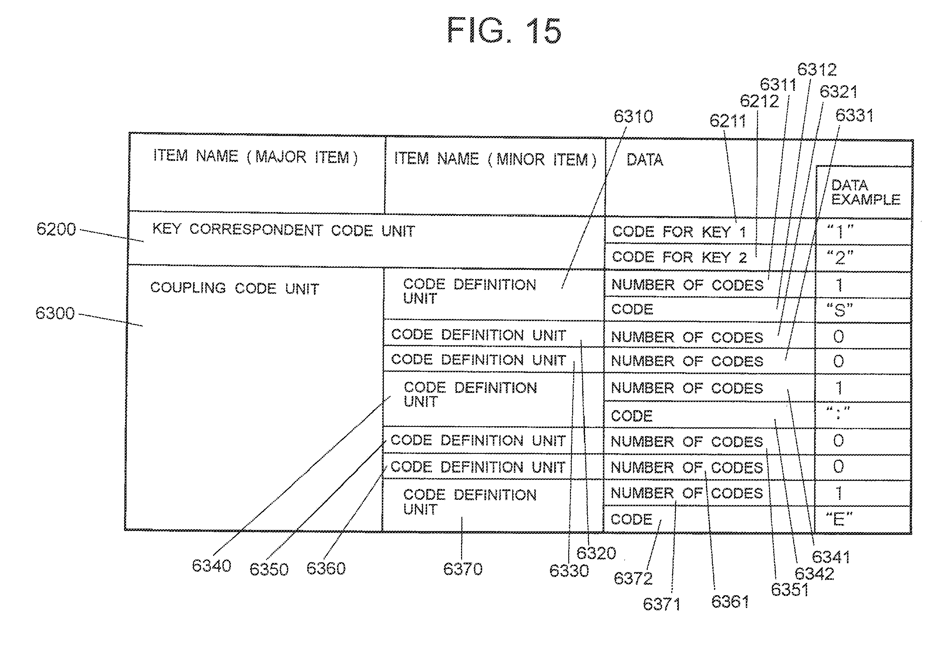

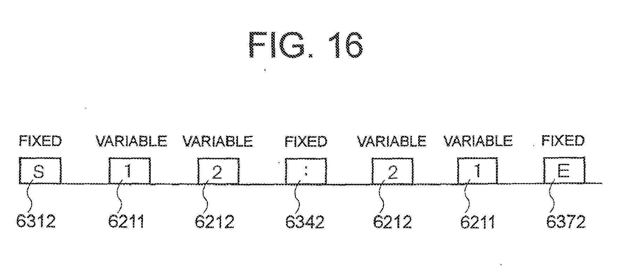

An application example of the third transmitting method is described below by referring to FIGS. 15 and 16. FIG. 15 shows an application example of the data set S10 shown in FIG. 8, and shows a key correspondent code unit and a coupling code unit only. A key correspondent code unit 6200 corresponds to the key correspondent code unit 1200 shown inFIG. 8, and a coupling code unit 6300 corresponds to the coupling code unit 1300 shown in FIG. 8. FIG. 16 shows the transmission order of the remote control codes in the application example of the third transmitting method.

An application example of possible control on the target equipment 50 by transmitting the remote control codes of the coupling code unit 6300 can be, for example, a time setting on the target equipment 50. In this case, the remote control codes transmitted to the target equipment 50 are time setting information for a time setting. The target equipment 50 has a setting capability for a clock (time setting capability), and is target equipment controlled by receiving a batch of seven remote control codes. Furthermore, the target equipment 50 is assumed to be target equipment requiring the leading transmission start code "S" indicating the start of transmitting the time setting information, the trailing transmission end code "E" indicating the end of transmitting the time setting information, and the intermediate hour-minute segmentation code ":" between the codes "S" and "E" for segmentation of hour and minute in the seven remote control codes.

As described above, the time setting information is formed by seven remote control codes, which can be discriminated by the seven code definition units 6310 to 6370 of the coupling code unit 6300, and the number of code of "1" or "0" of each of the code definition units 6310 to 6370.

Since each of number of codes 6311, number of codes 6341, and number of codes 6371 is "1" or more, the remote control code of each of the code definition units 6310, 6340, and 6370 is determined when the data set S10 is generated. When the seven remote control codes are transmitted, it is determined that the first remote control code is a remote control code (transmission start code) 6312 "S" , the fourth remote control code is a remote control code (hour-minute segmentation code) 6342 ":", and the seventh remote control code is remote control code (transmission end code) 6372 "E" (refer to FIG. 16).

Since each of the number of codes 6321, 6331, 6351, and 6161 is "0", the remote control code of each of the code definition units 6320, 6330, 6350, and 6360 is determined when a user operation is performed, and any of remote control code (code for key 1) 6211 "1" and remote control code (code for key 2) 6212 "2" of the key correspondent code unit 6200 is assigned to each of the code definition units 6320, 6330, 6350, and 6360 when the user operation is performed. The remote control codes assigned to the code definition units 6320, 6330, 6350, and 6360 are hour-minute information in the time setting information.

When the keys (operation buttons) 1 and 2 are pressed in step T14 shown in FIG. 12 to input "1221" as shown in FIG. 14, the remote control code 6211 "1" is assigned to the code definition unit 6320, the remote control code 6212 "2" is assigned to the code definition unit 6330, the remote control code 6212 "2" is assigned to the code definition unit 6350, and the remote control code 6211 "1" is assigned to the code definition unit 6360.

Therefore, in step T16 shown in FIG. 12, the code 6312 "S", the code 6211 "1", the code 6212 "2", the code 6342 ":", the code 6212 "2", the code 6211 "1", and the code 6372 "E" are sequentially transmitted in this order as shown in FIG. 16. Thus, the time of the clock of the target equipment 50 is set for 12:21.

In setting a time of a clock, a user has to at least input hour-minute information and perform a transmitting operation. Other information including a transmission start code, a transmission end code, a hour-minute segmentation code is necessary for the target equipment 50. However, if a user has to input the information such as a control code specific to target equipment, then the operations are too complicated to successfully set a time by erroneous input, etc.

However, in the third transmitting method using the coupling code unit, the above-mentioned problem can be easily solved.

At the data set generator side, the number of remote control codes which is required in setting a time on the target equipment 50, and a transmission start code, a transmission end code, and a hour-minute segmentation code which are to be transmitted as fixed input data can be defined in advance. If a time is set using the coupling code unit 6300 in which a transmission start code, a transmission end code, and a hour-minute segmentation code are defined in advance, the operations to be performed by a user are inputting hour-minute information and transmitting remote control codes only.

The above-mentioned operations are minimal operations for a use to perform, and the load of the user can be minimized by the operations. Since the user can easily anticipate that hour-minute information has to be input when a time is set, the user can easily anticipate that hour-minute information is input in the data input area 80. Consequently, user-friendly operations can be easily realized.

Thus, in the third transmitting method using the coupling code unit, a user can perform the minimal operations, and the steps of the operations can be reduced. Since the minimal operations are required, the learning steps of the operating method can be reduced.

As described above, in the second embodiment of the present invention, one mobile telephone can use a plurality of transmitting methods (first to third transmitting methods). Since there are a plurality of transmitting methods prepared, a provider of a remote control service can change the transmitting method and the configuration of a display unit depending on the type of information, thereby realizing various types of services. Furthermore, since a user can use various types of services, troublesome operations such as searching for a remote controller, handling it, and controlling it each time one of plural units of target equipment is to be controlled can be reduced.

The processing operations according to the flowchart shown in FIGS. 9 to 12 can be realized by allowing a CPU (control unit), that is, a computer, to read and execute a program stored in advance in a storage medium such as ROM or the like.

According to the second embodiment of the present invention, a remote control code read from the memory 37 as in the first embodiment is transmitted as an infrared signal by the infrared emission unit 36, but the remote control code can also be transmitted using a communications medium other than an infrared signal (ultrasonics, radio waves (RF), etc.).

Furthermore, according to the second embodiment, the format of the data set S10 is fixed, but the data set S10 can be variable depending on the services by defining "data presence/absence identification information" in each of the transmission remote control signal unit 1000, the batch code transmission unit 1100, the key correspondent code unit 1200, and the coupling code unit 1300.

For example, depending on the type of service, there can be the case in which a data selection system in a menu format is not required. In this case, the "data presence/absence identification information" in the batch code transmission unit 1100 is set as "absence" in generating the data set S10. In this case, only the "data presence/absence identification information" is set in the batch code transmission unit 1100 of the data set S10, and the transmission code groups 1110, 1120, ... are not defined. Thus, the total amount of data of the data set S10 can be reduced.

By reducing the amount of data, the data transmission efficiency in the radio region and the use efficiency of the memory 37 can be improved when the data set S10 is downloaded.

## Claims

1. A mobile telephone with remote-controlling capability which remote-controls target equipment, comprising:
an operation unit having a plurality of operation buttons;
storage means for storing various remote control codes associated with the plurality of operation buttons in a one-to-one relationship for various controlling operations on the target equipment, and a part of remote control codes of a group of remote control codes for a predetermined controlling operation on the target equipment; and
transmission means for transmitting to the target equipment the group of remote control codes formed by a remote control code associated with an operation button pressed by a user in advance and the part of remote control codes to perform the predetermined controlling operation on the target equipment in response to a user operation.

2. The mobile telephone with remote-controlling capability according to claim 1, wherein
the group of remote control codes forms time setting information for setting a time on the target equipment.

3. The mobile telephone with remote-controlling capability according to claim 1 or 2, further comprising:
download means for downloading the various remote control codes and the part of remote control codes from a server, which is connected to a communications network and holds the various remote control codes and the part of remote control codes, through the communications network, and storing the various remote control codes and the part of remote control codes in said storage means.

4. A remote-controlling method for a mobile telephone with remote-controlling capability which remote-controls target equipment, and has an operation unit and storage means for storing various remote control codes associated with a plurality of operation buttons of the operation unit in a one-to-one relationship for various controlling operations on the target equipment, and a part of remote control codes of a group of remote control codes for a predetermined controlling operation on the target equipment, comprising:
a step of transmitting to the target equipment the group of remote control codes formed by the part of remote control codes stored in the storage means and a remote control code associated with an operation button pressed by a user in advance to perform the predetermined controlling operation on the target equipment in response to a user operation.

5. The remote-controlling method according to claim 4, wherein
the group of remote control codes forms time setting information for setting a time on the target equipment.

6. The remote-controlling method according to claim 4 or 5, further comprising:
a step of downloading the various remote control codes and the part of remote control codes from a server, which is connected to a communications network and holds the various remote control codes and the part of remote control codes, through the communications network, and storing the various remote control codes and the part of remote control codes in the storage means.

7. A program used to direct a computer to execute a remote-controlling method for a mobile telephone with remote-controlling capability which remote-controls target equipment, and has an operation unit and storage means for storing various remote control codes associated with a plurality of operation buttons of the operation unit in a one-to-one relationship for various controlling operations on the target equipment, and a part of remote control codes of a group of remote control codes for a predetermined controlling operation on the target equipment, comprising:
a step of transmitting to the target equipment the group of remote control codes formed by the part of remote control codes stored in the storage means and a remote control code associated with an operation button pressed by a user in advance to perform the predetermined controlling operation on the target equipment in response to a user operation.
